# EUROPEAN PATENT APPLICATION

(11) **EP 0 963 851 A1**
(43) Date of publication of application: **15.12.1999**
(21) Application number: 97913493.9
(22) Date of filing: 02.12.1997
(51) Int. Cl.: B41J 2/41

(54) **ELECTROSTATIC RECORDING HEAD UNIT**

(30) Priority: 05.12.1996 JP 32574596; 05.12.1996 JP 32574696
(71) Applicant: NIPPON STEEL CORPORATION, Tokyo 100-12 (JP)
(72) Inventor: SATO, Hitoshi, Nippon Steel Corporation, Tokyo 100 (JP); HORIKAWA, Takashi, Nippon Steel Corporation, Tokyo 100 (JP); UENO, Noboru, K.K. Sankyo Seiki Seisakusho, Suwa-gun, Nagano 393 (JP)
(74) Representative: VOSSIUS & PARTNER
(86) International application number: JP9704400
(87) International publication number: WO9824633

(57) **Abstract**

An apparatus and method for detecting a head fault caused due to a short-circuit between main electrodes of an electrostatic recording head unit, in which a main electrode current supplied to at least one group of the main electrodes is detected, a value corresponding to a peak value of the main electrode current thus detected is held, and the value thus held is compared with a value corresponding to the main electrode current detected by the current detector thereby to determine whether or not the main electrode current is a short-circuit current. An electrostatic recording head unit that includes a head assembly having a multiplicity of main electrodes for discharge and a plurality of auxiliary electrodes arranged in opposed relation to the main electrodes; a coupling board on which connection portions connected to the main electrodes and signal lines connected to the connection portions are mounted; a main electrode drive board on which a main electrode drive circuit for driving the main electrodes is mounted; an auxiliary electrode drive board on which an auxiliary electrode drive circuit for driving the auxiliary electrodes is mounted; and means for connecting the main electrode drive board and auxiliary electrode drive board to the coupling board.

## Description

### TECHNICAL FIELD

The present invention relates to an electrostatic recording head unit, or more in particular, to a method and device for detecting a head fault due to the short-circuit between the main electrodes of the electrostatic recording head unit.

### BACKGROUND ART

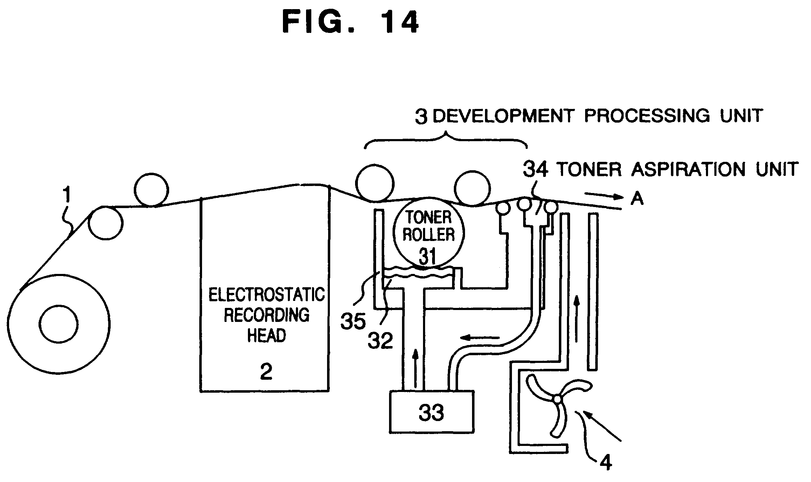

An electrostatic recording apparatus is for forming an electrostatic latent image on a recording medium by an electrostatic recording head and then producing an image by development with a liquid toner in a development processing unit thereof. The structure of an ordinary electrostatic recording apparatus will be explained below with reference to Fig. 14.

Fig. 14 is a diagram showing an electrostatic recording head of an electrostatic recording apparatus for forming an electrostatic latent image and a part of a development processing unit of the apparatus for developing the electrostatic latent image. A recording medium 1 wound in roll is transported in the direction of arrow "A" in the drawing, while an electrostatic latent image is formed by an electrostatic recording head 2 as a first step and then is transported to a development processing unit 3.

The electrostatic recording head 2 includes a multiplicity of needle-like main electrodes (not shown) aligned perpendicular to the direction in which the recording medium 1 proceeds, and a plurality of auxiliary electrodes provided corresponding to the main electrodes. The image plotted on the recording medium 1 is formed of a multiplicity of pixels. When the recording medium 1 passes through the electrostatic recording head 2, each main electrode is impressed with a voltage corresponding to the density of each pixel of the image portion on the recording medium opposed thereto, and discharges through the recording medium toward one of the opposed auxiliary electrode thereby to form an electrostatic latent image corresponding the image portion of the recording medium. In this way, the recording medium 1 that passes through the electrostatic recording head 2 is formed with an electrostatic latent image corresponding to the image to be formed.

The recording medium 1 that passes through the electrostatic recording head 2 is applied with a liquid toner 32 by a toner roller 31 of the development processing unit 3. The liquid toner 32 is composed of toner particles dissolved in a solvent. The toner particles are charged to the polarity opposite to that of the electrostatic latent image on the recording medium 1. Therefore, the toner particles applied on the recording medium 1 by the toner roller 31 are attracted to the electrostatic latent image by the electrostatic force, and are coupled with the surface layer of the recording medium 1 thereby to develop the electrostatic latent image.

In order to remove the extraneous liquid toner 32 remaining on the surface of the developed recording medium 1, the liquid toner 32 is attracted by a toner aspiration unit 34, and then passes through a dryer 4 for drying off the solvent.

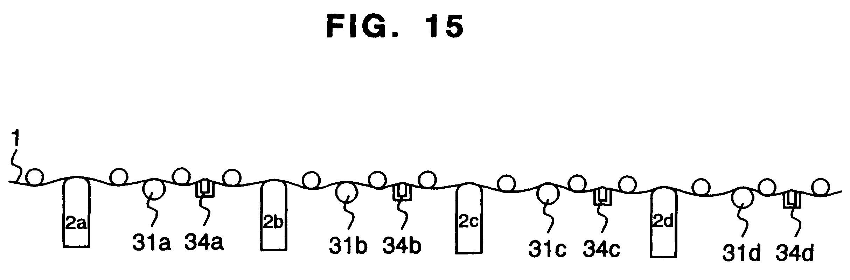

Fig. 15 is a diagram showing a color electrostatic recording apparatus of single pass type. The same component parts as those of Fig. 14 are designated by the same reference numerals, respectively. In Fig. 14, only one set of the electrostatic recording head 2, the development processing unit 3, etc. is shown. In Fig. 15, on the other hand, electrostatic recording heads 2a, 2b, 2c, 2d for four colors are provided. In the electrostatic recording apparatus of this type, a color image can be produced by superposing the colors sequentially one on another through a single process of transporting the recording medium 1. Generally, the color image is produced by superposing the four colors of cyan, magenta, yellow and black.

In the electrostatic recording apparatus described above, an electrostatic latent image is formed by discharging between the main electrodes and the auxiliary electrodes provided in the electrostatic recording head 2. For producing the desired image, therefore, the selected main electrodes are required to discharge accurately and charge the recording medium.

Once the short-circuit occurs between the main electrodes of the head portion of the electrostatic recording apparatus due to conductive dust or the like attached on the surface of the recording medium, sufficient discharge becomes impossible between the main electrodes and the auxiliary electrodes, so that the image cannot be normally formed. Further, the short-circuit not only has an adverse effect on the image forming process but also may burn the head due to an excess current. In order to prevent these undesirable accidents, a device is provided for detecting a head fault caused due to the short-circuit between the main electrodes.

In recent years, there has been an increasing demand for a higher recording speed of the electrostatic recording apparatus. The higher recording speed shortens the intervals of timings for energizing the main electrodes. Another demand that has recently arisen is for widening the recording medium for forming an image. As described later, the shortening the intervals of timing for energizing the main electrodes and the widening the recording medium are both factors of making it more difficult to detect the short-circuit between the main electrodes. Accordingly, the first object of the present invention is to provide a method and device for detecting a head fault caused due to the short-circuit between the main electrodes accurately even in the case where the intervals of the timing for energizing the main electrodes are shortened or the recording medium is widened.

A head unit having a head portion of an electrostatic recording apparatus as described above includes a head assembly having main electrodes and auxiliary electrodes, and a plurality of circuit boards. The circuit boards each include an internal board on which signal lines for the main electrodes are mounted, a drive board on which a main electrode drive circuit and an auxiliary electrode drive circuit are mounted, and a striation suppression board on which a head control circuit for suppressing the striation and a power unit are mounted. The circuit boards are connected to each other by signal line cables through connectors. Also, the head assembly and these circuit boards are juxtaposed with each other and are configured as a single head block. The head assembly is arranged independently of the circuit boards, and therefore many cables must be used for interconnecting them. A head unit assembly thus is comparatively bulky.

For producing a superior image quality in an electrostatic recording apparatus, on the other hand, it is necessary that the period during which the main electrodes are energized is longer than a predetermined shortest time. For the recording speed to be increased, therefore, the time length for energizing all the main electrodes at the same time is required to be shortened by increasing the number of the main electrodes so energized. In other words, the number of the main electrodes energized simultaneously by a drive circuit must be increased to decrease the number of groups into which all the main electrodes are divided. The same can be said of widening the recording medium, in which case it is similarly necessary to increase the number of the main electrodes driven simultaneously by a single drive circuit without increasing the number of groups into which the main electrodes are divided.

In the conventional head unit configuration, however, an increased number of drive circuits also increases the number of connectors for connecting the electrodes, resulting in an increased thickness of the unit even through the packaging is possible. This poses the problem of an increased structure size of the whole apparatus. The main electrode drive circuits may alternatively be mounted on the two sides of the circuit board to increase the packaging density only at the sacrifice of a worse maintainability.

Further, the size of each circuit board increases to such an extent that the whole board must be replaced at the time of a malfunction of a part for an increased maintenance cost.

Also, in the head unit structure of the conventional electrostatic recording apparatus, the main electrode drive circuits and the main electrodes are connected through many signal cables and the internal boards. The resulting increased length of the wiring increases the stray capacity and imposes a burden on the drive circuit unsuitably for achieving a high speed. In the case where the transportation speed of the recording medium is low, the time intervals of energizing the main electrodes is so long that the stray capacity poses no problem. An attempt to increase the transportation speed often fails, however, due to the output circuit characteristics of the drive circuit.

The second object of the present invention is to provide an electrostatic recording head unit having a compact configuration in spite of an increased number of the main electrode drive circuits, and in which the maintenance cost for replacing the parts can be reduced.

### DISCLOSURE OF INVENTION

A detection device for detecting a head fault caused due to a short-circuit between main electrodes of an electrostatic recording head unit according to the present invention comprises: a current detector for detecting a main electrode current supplied to at least one group of the main electrodes; means for holding a value corresponding to the main electrode current detected by the current detector; first comparison means for comparing the value held in the holding means with a value corresponding to the main electrode current detected by the current detector to determine whether or not the main electrode current is a short-circuit current; and second comparison means for comparing a number of times the main electrode current is determined as the short-circuit current by the first comparison means, with a predetermined value to determine that a head fault is occurred in the main electrode group when the number of times the short-circuit current is determined to be occurred exceeds the predetermined value.

An electrostatic recording head unit according to the present invention comprises: a head assembly including a multiplicity of main electrodes for discharge aligned along a path through which a recording medium to be recorded passes, and a plurality of auxiliary electrodes arranged in opposed relation to the main electrodes; a coupling board on which connection portions connected to the main electrodes and signal lines connected to the connection portions are mounted; main electrode drive board on which a main electrode drive circuit for driving the main electrodes is mounted; an auxiliary electrode drive board on which an auxiliary electrode drive circuit for driving the auxiliary electrodes is mounted; and means for connecting the main electrode drive board and auxiliary electrode drive board to the coupling board.

### BRIEF DESCRIPTION OF DRAWINGS

Figs. 1A and 1B are a front view and a side view, respectively, showing the structure of an electrostatic recording head unit according to an embodiment of the present invention.
Fig. 2 is a block diagram showing an electrical connection of the components including an auxiliary electrode drive board, an insulating board and a striation suppression board of an electrostatic recording head unit according to an embodiment of the present invention.
Figs. 3, 4, 5 and 6 are block diagrams showing the electrical connection of an electrostatic recording head unit according to an embodiment of the present invention.
Fig. 7 is a diagram showing a circuit for measuring a main electrode current of an electrostatic recording apparatus.
Figs. 8A and 8B are diagrams showing the state of the steady current in the absence of the short-circuit between main electrodes for high and low recording speeds.
Fig. 9 is a block diagram showing the electrical connection of a detection device for detecting a head fault caused due to the short-circuit between main electrodes of an electrostatic recording unit according to a first embodiment of the present invention.
Fig. 10 is a block diagram showing the connection of a sequencer of the head fault detection device according to the first embodiment.
Figs. 11A and 11B are diagrams for explaining the principle of detecting a head fault caused due to the short-circuit between the main electrodes of the apparatus of Fig. 9.
Fig. 12 is a block diagram showing the electrical connection of the essential parts of a device for detecting a head fault caused due to the short-circuit between main electrodes of an electrostatic recording head unit according to a second embodiment of the present invention.
Fig. 13 is a block diagram showing the electrical connection of the essential parts of a device for detecting a head fault caused due to the short-circuit between main electrodes of an electrostatic recording head unit according to a third embodiment of the present invention.
Figs. 14 and 15 are diagrams showing a basic configuration of an electrostatic recording apparatus.

### BEST MODE FOR CARRYING OUT THE INVENTION

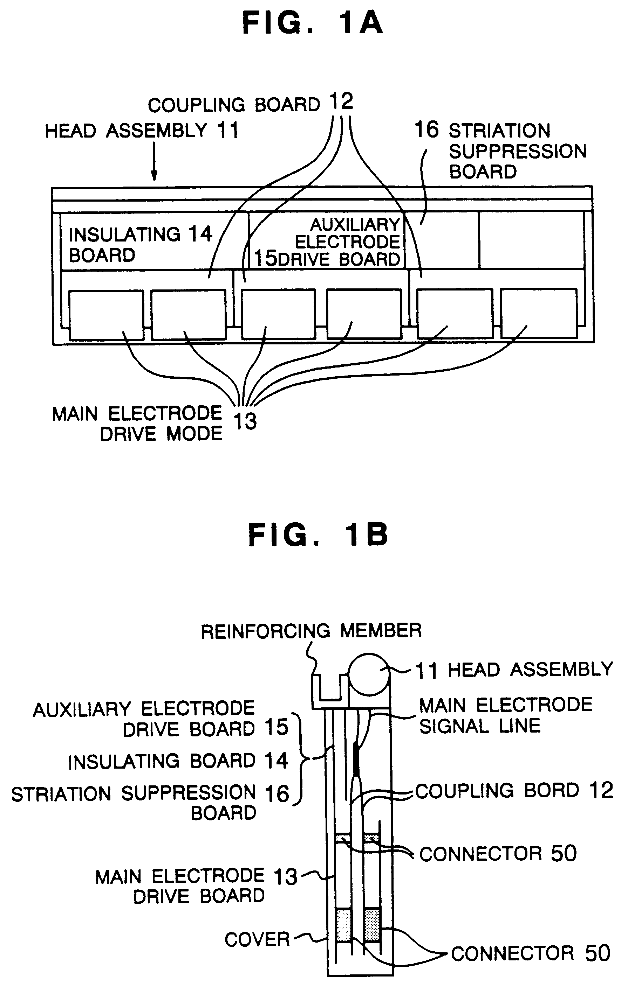

The configuration of an electrostatic recording head unit according to a first embodiment of the present invention will be explained with reference to Figs. 1 to 6.

Figs. 1A and 1B are schematic diagrams showing the first embodiment of the present invention, or specifically, a front view and side view of an electrostatic recording head unit of the electrostatic recording apparatus, respectively.

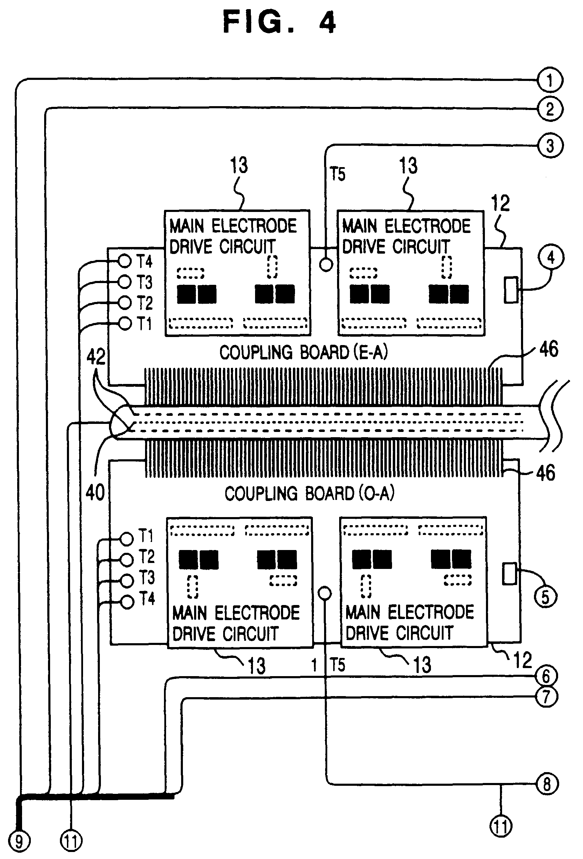

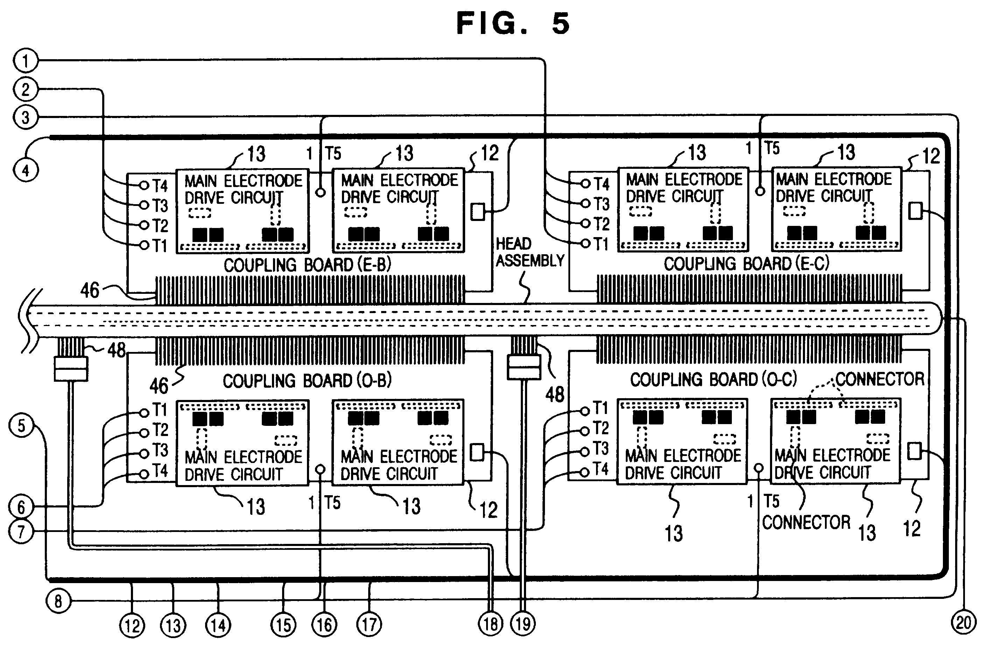

The electrostatic recording head unit shown in Fig. 1A comprises a head assembly 11 including main electrode signal lines and auxiliary electrode signal lines in the head; coupling boards 12 connected with the main electrode signal lines; an auxiliary electrode drive board 15 connected with the auxiliary electrode signal lines; an insulating board 14 on which a control circuit is mounted; and a striation suppression board 16. The coupling boards 12 and the main electrode drive boards 13 are connected by connectors 50. The auxiliary electrode drive board 15 and a connection portion 48 of the auxiliary electrode signal lines of the head assembly are connected by a connector as shown in Figs. 4 and 5 described later. These boards are arranged under a cover.

In the front view of Fig. 1A, the insulating board 14, the auxiliary electrode drive board 15 and the striation suppression board 16 are arranged under the head assembly 11. On the back of these boards, the main electrode signal lines and the auxiliary electrode signal lines (not shown) from the head assembly 11 and a part of the coupling boards 12 connected to the main electrode signal lines are located. In the lower part of the front view, the three coupling boards 12 and the six main electrode drive boards 13 connected thereto by connectors are arranged. As shown in the side view explained below, another three coupling boards are arranged similarly on the back of the three coupling boards 12.

As shown in the side view of Fig. 1B, the signal lines are extended from the head assembly 11 to the main electrode drive boards 13, and these boards are directly connected onto the coupling boards 12. A metal reinforcing member is arranged adjacently to the head assembly 11. The coupling boards 12 and the main electrode drive boards 13 are connected by connectors. The electrical connection of the auxiliary electrode drive board 15, the insulating board 14 and the striation suppression board 16 will be described later.

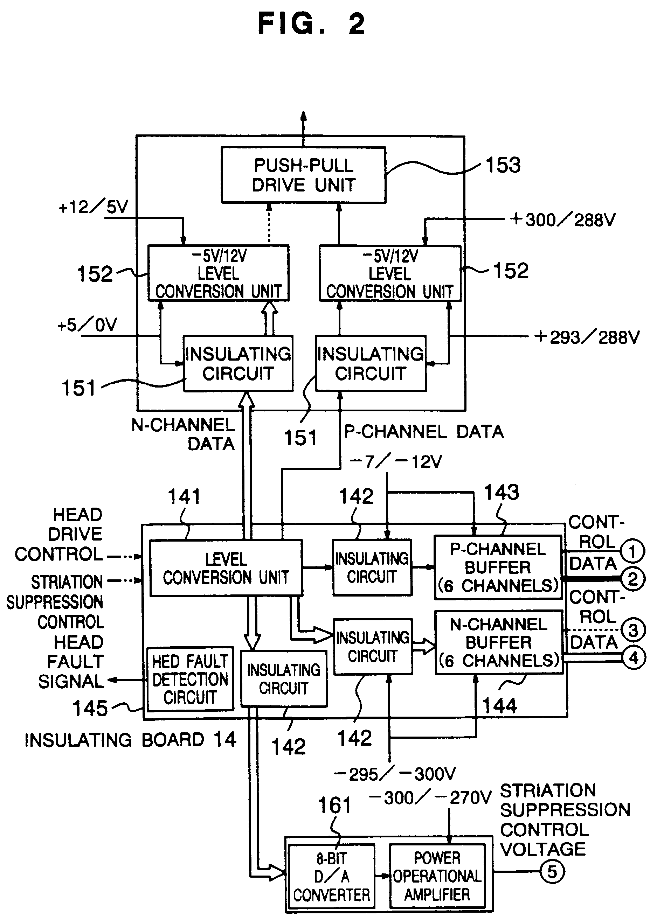

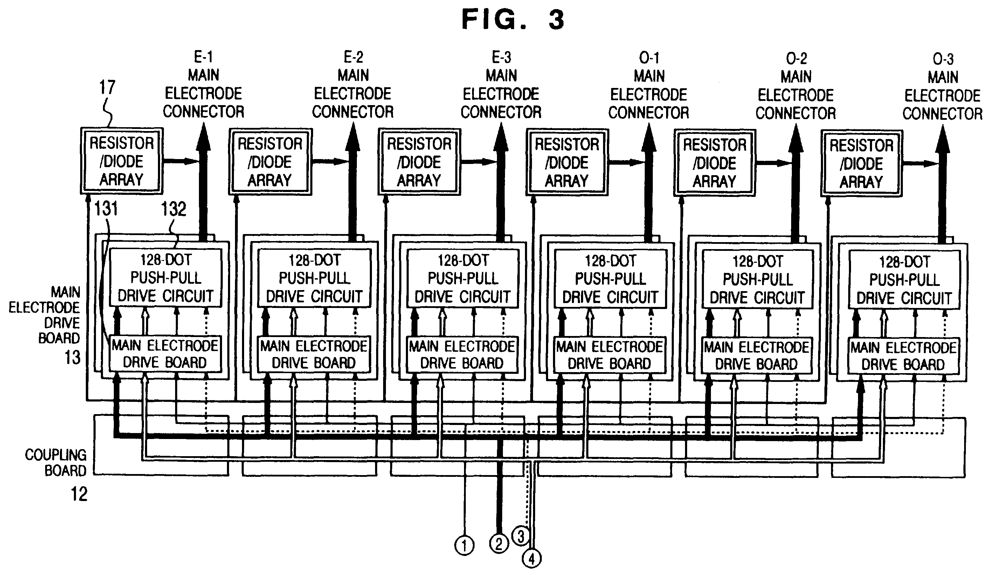

Now, a more detailed description will be given including the electrical connection with reference to Figs. 2 and 3. Incidentally, in Figs. 2 and 3, the encircled numerical characters ① to 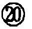 designate the connections of the signal lines over the two diagrams.

The control board, i.e. the insulating board 14 contains therein a level conversion unit 141 for receiving the main electrode drive signal and auxiliary electrode drive signal, which are calculated based on the image data to be formed, as a RS422 level signal, and converting the level of them to the TTL signal level; and insulating circuits 142 for insulating the converted signals from the high-voltage circuit in subsequent stages. Part of the output from the level conversion unit is applied to insulating circuits 151 of the auxiliary electrode drive board 15 described later. One of the outputs of the three insulating circuits receiving the signal from the level conversion unit is applied to the striation suppression board 16. The remaining two outputs are applied to a P-channel buffer 143 and an N-channel buffer 144. The N-channel buffer 144 is for outputting data for charging the main electrode potential to a potential capable of forming a latent image by a push-pull drive circuit of the main electrode drive circuit. The P-channel buffer 143 is for discharging the main electrode potential to zero (0) volt by the push-pull drive circuit of the main electrode drive circuit.

Further, a head fault detection circuit 145 is provided. The head fault detection circuit is a circuit for detecting the excess current flowing in the main electrodes unique to the short-circuit between the main electrodes which undesirably initiates the next energization without sufficiently discharging the potential of the main electrodes after the preceding energization thereof. The head fault detection circuit detects and notifies a fault before generating the short-circuit.

The P- and N-channel buffers each have six channels. The signal of each channel is applied to each main electrode drive board. A control signal and a data signal are included for each channel. In this case, a source voltage of -300 volts is used on the main electrode drive side providing a high-voltage system, and +5 volts is used on the input side providing a low-voltage system.

The auxiliary electrode drive board 15 contains therein two insulating circuits 151 for receiving the auxiliary electrode drive signals to be driven as data for two systems of the N- and P-channels; and level conversion units 152 for receiving the signals from these insulating circuits and converting the signal level. The input signal to the insulating circuit is supplied from the insulating board described above. Further, a push-pull drive unit 153 is provided for receiving the signals from the level conversion units to drive the auxiliary electrodes. In this case, too, the source voltages for each circuit are so different on both sides of the insulating circuits that +300 volts is used on high-voltage side and +5 volts is used on low-voltage side.

The striation suppression board 16 includes an 8-bit D/A converter 161 for receiving an 8-bit signal from one of the insulating circuits of the insulating board to convert it into an analog signal; and a power operational amplifier 162 for converting the output signal of the D/A converter into a striation suppression control voltage. The output of the striation suppression board 16 is applied to a resistor/diode array unit 17 configured of resistors and diodes arranged in the output stage to each main electrode of each main electrode drive board to be added to the main electrode drive voltage, so that the striation suppression is performed.

The conventional striation suppression board includes a head controller and a power unit. The striation suppression board 16 according to this embodiment, in contrast, includes only a head control circuit, while as described later, the resistor/diode arrays are arranged in the coupling boards and the electric power is acquired from an external source through a power terminal. Therefore, the striation suppression board 16 is very compact.

The resistor/diode arrays 17 are arranged on or in the coupling boards, and have the resistance values and the diode characteristics thereof selected in such a manner as to calibrate the uneven potential distribution between the auxiliary electrodes and the main electrodes, for example.

The coupling boards 12 is for receiving the control signal and data signal from the insulating board and the striation suppression control voltage from the striation suppression board, and for supplying the signals and power to the main electrode drive boards or the resistor/diode array units 17. The primary function of the coupling boards is the power supply, and the transmission of the control and data signals between the main electrode drive boards and the head assembly.

Each main electrode drive board 13 includes a level converter 131 for receiving the control and data signals from the insulating board to convert the signals of 5 volts to the signals of 12 volts; and a push-pull drive circuit 132 of 128 dots for supplying the output signals of the level converter to the main electrodes. The output of this circuit is used finally for applying the voltage to the main electrodes after the striation correction by the resistor/diode array described above.

Further, to facilitate the understanding of the features of the present invention, the connection between the boards will be explained with reference to Figs. 4, 5 and 6. The encircled numerical characters ① to 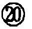 in Figs. 4, 5 and 6 designate the connection of the signal lines over a plurality of diagrams.

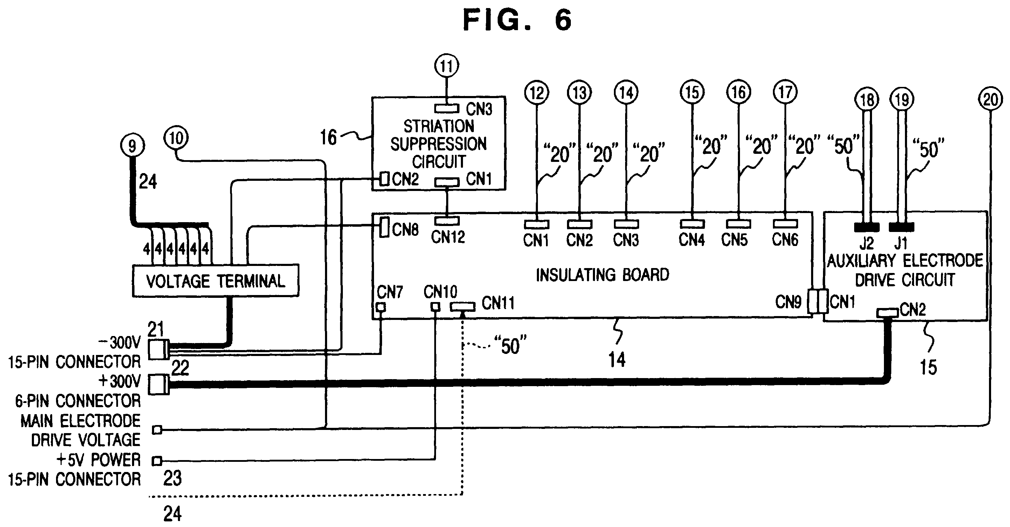

There are two power terminals, one 22 for +300 volts and the other 21 for -300 volts, for example (Fig. 6) in each of the terminals. These terminals are for supplying power to the insulating board 14, the auxiliary electrode board 15, the striation suppression board 16 and the coupling boards 12 directly or through the power terminal 20. The 5-volt terminal 23 is a low-voltage power terminal for a control or data input circuit and is used as a low-voltage power supply of each of the boards. Numeral 24 designates a connector terminal supplied with data.

A multiplicity of the main electrodes 40 are aligned perpendicular to the direction in which the recording medium (not shown) proceeds, and each of a plurality of auxiliary electrodes 42 is arranged in opposed relation to a predetermined number of main electrodes. The main electrodes are supplied with a main electrode drive voltage from the main electrode drive boards 13 through connection portions 46 provided on the coupling boards 12. The auxiliary electrodes, on the other hand, are supplied with an auxiliary electrode drive voltage from the auxiliary electrode board 15 through the connection portion 48.

The connection among the insulating board, the auxiliary electrode boards and the striation suppression board will be explained below.

A data signal is applied from the insulating board to the auxiliary electrode boards by the connector CN9 of the insulating board and the connector CN1 of the auxiliary electrode boards.

The data signal is applied to the striation suppression board from the insulating board by the connector CN12 of the insulating board and the connector CN1 of the striation suppression board. These boards are arranged in juxtaposition under the head assembly as shown in Fig. 1A.

The output signals of the auxiliary electrode boards are applied through the connectors J1 and J2 to the auxiliary electrodes of the head assembly. In Fig. 5, the connection is easily established by a connecting cable due to the intermediary of the connector of the head assembly.

The striation suppression control signal is applied to each coupling board through the connector CN3 of the striation suppression board. The control signal is supplied to the resistor/diode arrays arranged on the coupling boards.

The control and data signals are supplied to the coupling boards through the connectors CN1, CN2, CN3, CN4, CN5 and CN6 of the insulating board. According to this embodiment, each coupling board is supplied with the control and data signals for the two main electrode drive boards. These signals are supplied to the main electrode drive boards connected by the connectors and mounted on the coupling boards. The signals processed in the main electrode drive boards are applied through the connectors to the coupling boards, and further to the main electrode signal lines connected with the coupling boards.

As shown in Fig. 1B, the coupling boards are located under the head assembly and under the insulating board where the main electrode drive boards are also located. As seen from the side view of Fig. 1, of the two connectors for connecting the coupling boards and the main electrode drive boards, the one nearer to the head assembly is for supplying a signal to the main electrode signal line from the main electrode drive boards. The lower connector is for applying the control and data signals, which are received from the insulating board, from the coupling boards to the main electrode drive boards.

This configuration shortens the signal line length between the main electrodes and the drive circuits as compared with the conventional head block.

As shown in Figs. 4 and 5, the six coupling boards 12 are arranged, three each on both sides of the head assembly, for the odd- and even-numbered main electrodes, respectively.

In the electrostatic recording head, the main electrodes 40 and the auxiliary electrodes 42 are aligned in juxtaposition perpendicular to the direction in which the recording medium proceeds, i.e. along the transverse direction of the recording medium. The needle-like main electrodes are arranged at intervals of about 0.2mm, and discharge with the auxiliary electrodes in the neighborhood of the main electrodes in accordance with the input image data. The odd- and even-numbered ones of the main electrodes arranged sequentially are driven by the coupling boards on the two sides of the head, respectively.

For example, each main electrode drive board energizes 128 main electrodes at a time. The two main electrode drive boards on the coupling board have what is called a Ping - Pong buffer configuration in which when one of them is driven, the other receives data. On the coupling board, one main electrode drive board is energized with a voltage at a time. On the odd-numbered side of the main electrodes, there are three coupling boards, and therefore 384 (thrice of 128) main electrodes are energized at a time. On both sides, therefore, 768 (twice of 384) main electrodes are energized at a time.

As shown in Fig. 1, according to the embodiment described above, the conventional internal board having the sole function of connecting the main electrodes and the main electrode drive circuits is eliminated. Further, a resistor/diode array for determining the striation voltage is provided on each coupling board while securing the striation power from an external source, and only the remaining logic circuit for striation control is arranged on a separate board. Also, the main electrode drive circuit is subdivided into modules and the boards are connected hierarchically. As a result, even when the drive circuits are increased in number to meet the demand for higher speed, the head unit remains compact in view of the fact that the drive circuits can be mounted on the two sides of the boards, and the maintenance cost can be decreased because only a defective board in module is replaced at the time of a component malfunction.

Further, the distance is shortened between the output terminal of the drive circuit of the main electrode drive boards and the main electrodes at the forward end of the head assembly, resulting in a smaller stray capacity of the drive circuit.

Although the auxiliary electrodes are arranged on the two sides of the train of the main electrodes in the embodiment described above, the present invention is applicable with equal effect to the case in which the auxiliary electrodes are arranged only on one side of the train of the main electrodes.

The electrostatic recording head unit according to the present invention is not limited to the embodiments described above, but can include an appropriate number of the coupling boards and the main electrode drive boards. Also, instead of the removable connectors described above, an appropriate method of connection can be employed for the same parts.

As described above, according to this embodiment, the whole size of the head unit can be reduced as relative to the increase in recording speed of the electrostatic recording apparatus. Also, while realizing a shorter cable length as described above, the modular configuration of each circuit makes it possible to replace only the defective board in module at the time of a component malfunction, thereby reducing the maintenance cost.

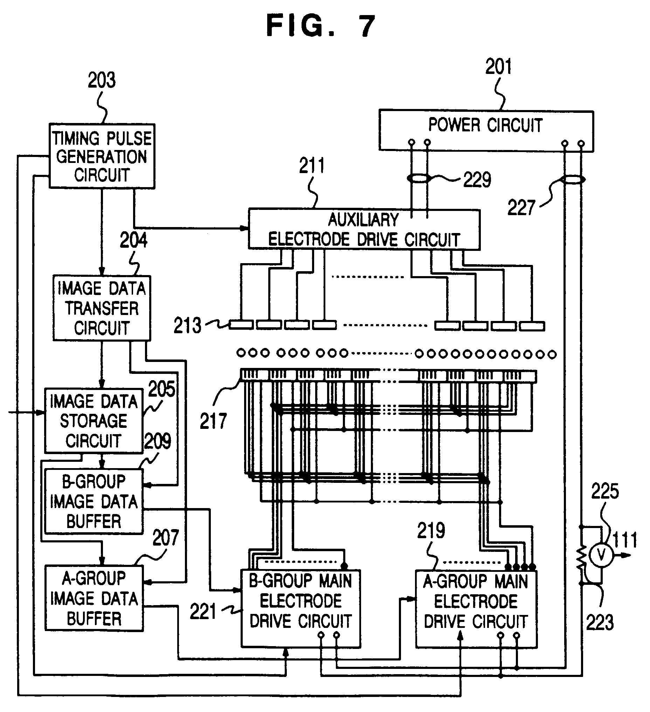

Now, a device for detecting a head fault caused due to the short-circuit between the main electrodes of the electrostatic recording head unit according to the present invention will be explained with reference to Figs. 7 to 13.

Conventionally, a method is employed in which the current supplied to the main electrodes of the electrostatic recording head unit is compared with the normal current, and then the difference is integrated, so that when the integration exceeds a predetermined value, it is determined that a short-circuit is occurred between the main electrodes. With the increase in the recording speed of the electrostatic recording apparatus, however, the interval of timings at which a high voltage is applied to the main electrodes is shortened and the effect of the inductance of the high-voltage circuit increases. Further, with the increase in the width of the recording medium, the number of the main electrodes increases for an increased transverse length of the head. Thus, the head capacity increases, and so does the normal current of the main electrodes. According to the conventional method, therefore, it is difficult to detect the difference between the normal current and the short-circuit current in the main electrodes at a high recording speed.

Before explaining a device for detecting a head fault due to the short-circuit between the main electrodes according to the present invention, a circuit for energizing the main electrodes of the electrostatic recording apparatus will be explained with reference to Fig. 7. Fig. 7 is a diagram showing a circuit for energizing the main electrodes and auxiliary electrodes of the electrostatic recording head unit. The electrostatic recording head unit, the mechanical structure of which has been described primarily with reference to Figs. 2 to 6, is shown in terms of a configuration of the electrical functions in Fig. 7. Specifically, the head unit of the electrostatic recording apparatus energizes the main electrodes according to the image data to be recorded, and causes discharge between them and the auxiliary electrodes thereby to form a latent image corresponding to the image described above on a recording medium. The component elements of Fig. 7 are partly identical to those of Figs. 2 to 6, but it should be understood that some of the component elements are designated by different reference numerals.

The image data indicating whether or not the main electrodes are to be energized based on the image (not shown) to be recorded according to a well-known method are stored in an image data storage circuit 205. Also, the voltage for energizing the main electrodes is applied from a power circuit 201 through a line 227 to an "A"-group main electrode drive circuit 219 and a "B"-group main electrode drive circuit 221, while the voltage for energizing the auxiliary electrodes is applied from the power circuit 201 through a line 229 to the auxiliary electrode drive circuit 211.

The "A"-group main electrode drive circuit 219, upon receipt of the image data held in the "A"-group image data buffer 207, applies a high voltage to the selected one of the main electrodes of "A" group at a timing determined by the timing pulse supplied from a timing pulse generation unit 203. The "B"-group main electrode drive circuit 221, on the other hand, upon receipt of the image data held in the "B"-group image data buffer 209, applies a high voltage to the selected one of the "B"-group main electrodes at a timing determined by the timing pulse supplied from the timing pulse generation unit 203. During the period when the "A"-group main electrodes are energized, the auxiliary electrode drive circuit 211 applies a high voltage to the auxiliary electrodes corresponding to at least one of the main electrodes of "A" group by a timing pulse supplied from the timing pulse generation unit 203. During the period when the main electrodes of "B" group are energized, on the other hand, the auxiliary electrode drive circuit 211 applies a high voltage to the auxiliary electrodes corresponding to at least one main electrode of "B" group. During the period when the main electrodes of "A" group are energized, the "B"-group image data buffer 209 receives from the image data storage unit 205 and stores the image data used for energizing the main electrodes of "B" group during the next period. In similar fashion, during the period when the main electrodes of "B" group are energized, the "A"-group image data buffer 207 receives from the image data storage unit 205 and stores the image data used for energizing the main electrodes of "A" group during the next period. These timings are controlled by the image data transfer circuit 204 activated by the timing pulse from the timing pulse generation unit 203.

The image data transfer circuit 204 also performs such a control operation that the new image data transferred from the units in the preceding stage not shown are stored in an area of the image data storage unit 205 where the data used for energizing the main electrodes is stored.

The line 227 for supplying a high voltage to the main electrode drive circuits 219 and 221 from the power circuit 201 is connected with a resistor 223. The current is measured in the main electrodes by the voltage 225 across the resistor for detecting the shorting of the main electrodes as described below.

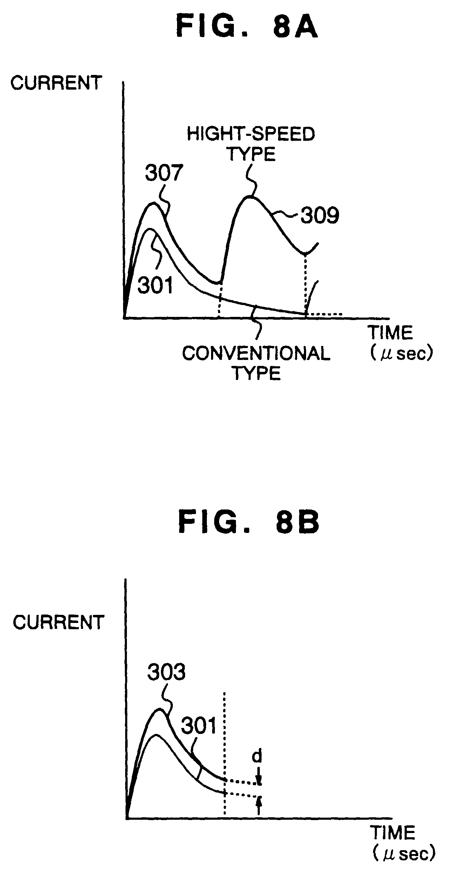

Now, a conventional method for detecting the short-circuit of the main electrodes of the electrostatic recording head will be explained with reference to Fig. 8B. In Fig. 8B, reference numeral 301 designates a value of a main electrode current under normal condition, and 303 a value of the main electrode current at the time of a short-circuit. Normally, the main electrode current increases sharply in the initial stage of discharge and decreases to a predetermined value at the end of the discharge. However, the short-circuit current is larger than the normal current, and has a difference d with the normal current even at the end of the discharge. Conventionally, the actual main electrode current is compared with the normal current 301 measured in advance, and when a predetermined difference is detected between the actual main electrode current and the normal current 301 at the end of the discharge, it is determined that the short-circuit is occurred. With the increases in recording speed, however, as shown in Fig. 8A, before the main electrode current 307 of the first discharge session sufficiently decreases, the main electrode current 309 for the next discharge session appears. Under normal condition, therefore, the waveform of the main electrode current for high recording speed is quite different from that of the main electrode current 301 for low recording speed. It is therefore difficult to detect the short-circuit from the magnitude of the main electrode current at the end of the discharge. The conventional method has such a problem.

The problem described above is solved by the present invention in the following manner.

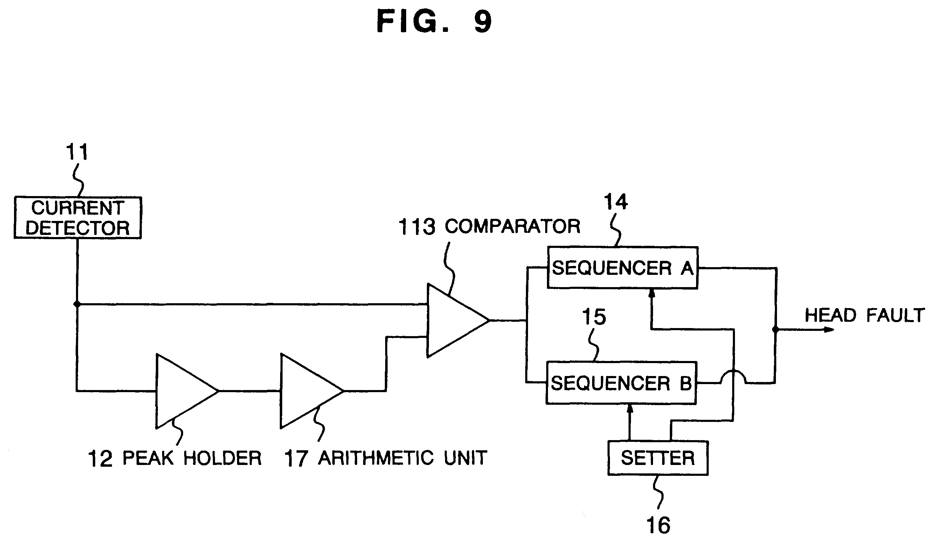

The configuration of a device for detecting a head fault due to the short-circuit between the main electrodes according to a first embodiment of the present invention will be explained with reference to Fig. 9.

The output of a current detector 111 in Fig. 9 provides the output of a voltmeter 225 in Fig. 7, i.e. the measured main electrode current of two groups "A" and "B". A peak holder 112 holds the peak value of the main electrode current output from the current detector 111, and an arithmetic unit 117 arithmetically processes the peak value as predetermined arithmetic operation and supplies the resulting output to the comparator 113. The predetermined arithmetic operation is to multiply the peak value by a predetermined coefficient smaller than "1", such as 0.2 or 0.1, or to calculate the logarithm of the peak value. The arithmetic operation may alternatively be to generate a correspondingly larger output when the peak value increases without being exceeded by the output. Which arithmetic operation is selected is desirably determined empirically in such a manner as to obtain an output capable of detecting a short-circuit from the waveforms of the normal main electrode current and the short-circuit main electrode current actually observed when the method described below is employed.

Further, the main electrode current output from the current detector 111 is compared with the output of the arithmetic unit 117 by the comparator 113. The comparator 113 generates HIGH signal when the value of the main electrode current is larger than the output of the comparator 113, and generates LOW signal when the value of the main electrode current is not larger than the output of the comparator 113.

A sequencer "A" 114 and a sequencer "B" 115 correspond to the groups "A" and "B" of the main electrodes, respectively, and have the function of counting and comparing the pulses as described later.

A setter 116 is for setting a reference value for the comparison to be supplied to the sequencers "A" 114 and "B" 115. The value set by the setter 116 is given in a 3-digit binary number, for example.

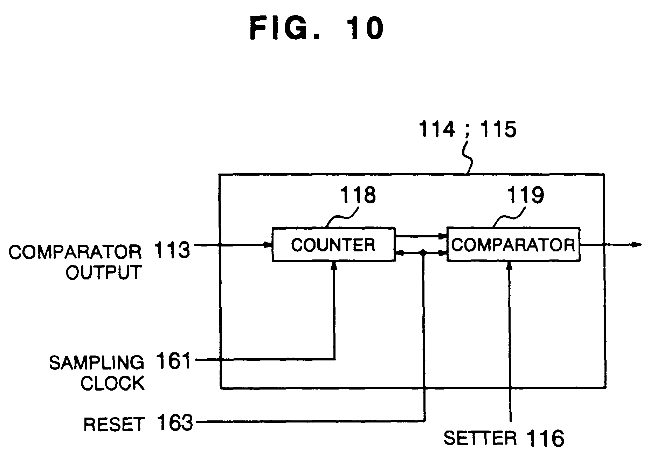

Fig. 10 is a block diagram showing a configuration of the sequencers 114 and 115. A counter 118 increments the count thereof by "1" upon application thereto of a sampling clock 161 when the output of the comparator 113 is HIGH, for example, and clears the count thereof upon application thereto of the sampling clock 161 when the output of the comparator 113 is LOW. As a result, the counter 118 is cleared as long as the value of the main electrode current is reduced to a value smaller than the output of the comparator 113 at the time of sampling. Specifically, as long as there occurs no continued state in which the main electrode current is larger than the output of the comparator 113 at the time of sampling, the count of the counter 118 is not increased.

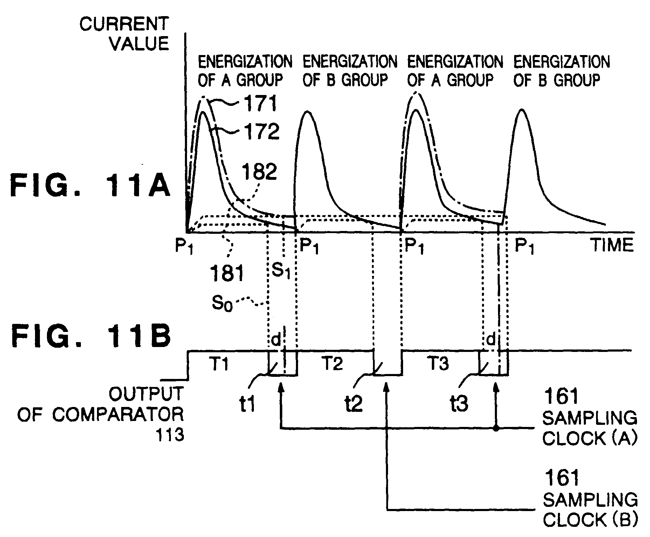

The sampling clock 161 is generated by a timing pulse generation unit 203 shown in Fig. 7. The timings are desirably generated immediately before application of a voltage to each main electrode is terminated, i.e. immediately before the starting time point of each cycle of voltage application to the main electrodes, or immediately before time p1 in Fig. 11A This is by reason of the fact that the transient current attenuates most and the proportion of the steady current is highest immediately before the end of voltage application, conveniently for determining whether or not the steady current exists, i.e. the main electrodes are shorted.

Also, the peak holder 112 is supplied with a pulse signal 162 generated at the starting time p1 of each cycle of voltage application to each main electrode, and the peak value held in the peak holder is reset. This pulse signal 162 can be used as the sampling clock 161.

The comparator 119 generates an output when the count value on the counter 118 assumes a value not less than the value set by the setter 116, which output indicates a head fault. The comparator 119 holds the output until a reset signal 163 is applied thereto. The reset signal 163 is applied artificially to the counter 118 and the comparator 119 when the user takes note of the occurrence of the head fault.

Now, the operation will be explained with reference to Figs. 11A and 11B.

The current detector 111 generates an output of the waveform shown by solid line 171 in the case where the main electrodes are normal, and upon occurrence of a short-circuit in the main electrodes, generates an output of a waveform indicated by one-dot dashed line 172. The arithmetic unit 117, which outputs a value representing a predetermined proportion of the peak value of the main electrode current, generates an output indicated by dotted line 181 when the main electrodes are normal, and generates an output indicated dotted line 182 upon occurrence of a short-circuit in the main electrodes. The comparator 113 in Fig. 9 compares the output of the current detector 111 with the output of the arithmetic unit 117, and generates HIGH output when the output of the current detector 111 is larger than the output of the arithmetic unit 117. When the main electrodes are normal as shown in Fig. 11B, therefore, HIGH signal is generated during the period from time p1 to time s0 when the current waveform 171 becomes lower than the waveform 181, whereas LOW signal is generated during the period from time s0 to the next time p1. Also, upon occurrence of the short-circuit in the main electrodes, HIGH signal is generated during the period from time p1 to time s1 when the current waveform 172 becomes lower than the waveform 182, whereas LOW signal is generated during the period from time s1 to the time next time p1.

As a result, in Fig. 11B, the output is HIGH during the periods T1, T2 and T3, and LOW during the periods t1, t2 and t3. T1 is the energization period of the group "A" of the main electrodes, and T2 is the energization period of the group "B" thereof. The groups "A" and "B" are energized alternately. Each sequencer has an independent sampling clock corresponding to the timing of energization of the corresponding main electrode group, in which case therefore no sampling is performed by energization of other main electrode groups.

Assuming that the short-circuit has occurred in the main electrodes of "A" group, the output waveform of the comparator 113 rises during the periods of T1 and T3, etc. As a result, the timing at which the output of the comparator 113 becomes LOW is delayed. On the other hand, the timing s1 or s3 at which the sampling clock is applied remains constant. Therefore, the period T1 lengthens by "d", with the result that the sampling clock may be applied when the output of the comparator 113 is HIGH. In such a case, the counter 118 is incremented by "1". Upon receipt of the sampling clock at the timing of HIGH during the next period T3, the counter 118 is similarly incremented by "1". When the counter 118 continues to be incremented in this way and comes to assume a value higher than a setting, the comparator 119 outputs a head fault output.

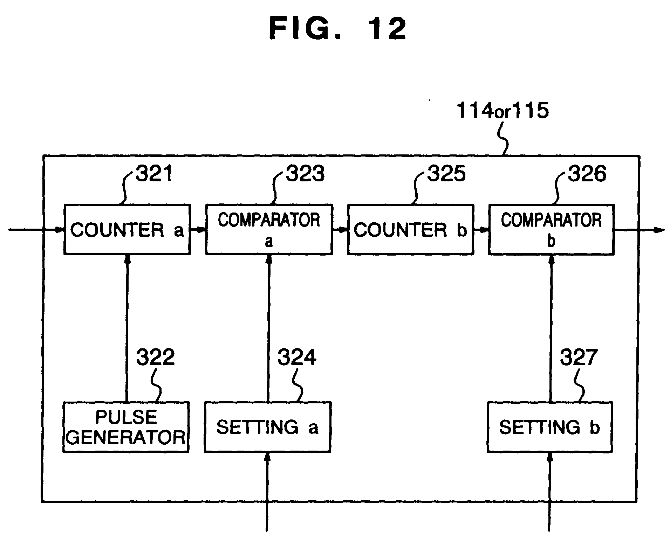

Fig. 12 is a block diagram showing a configuration of the sequencer according to another embodiment. A counter "a" 321 counts the output pulses from a pulse generator 322 for generating clock pulses at a predetermined frequency, when the output of the comparator 113 is LOW, i.e. during the period from time s0 or s1 to time p1 immediately after that when the timing pulse 162 is generated in Fig. 11A. Also, the counter "a" 321 clears the count immediately after time p1 in Fig. 11A. The pulse generator 322 may not be included in the sequencer, in which case the pulse output from an external source can be used.

A comparator "a" 323 compares the count on the counter "a" 321 with a setting "a" in a register 324 set by the setter 116, and outputs a signal when the count on the counter "a" 321 decreases to or below the setting "a" at time p1. A counter "b" 325, on the other hand, is for counting the output of the comparator "a" 323. A comparator "b" 326 compares the count on the counter "b" 325 with a setting "b" in a register 327 set by the setter 116, and outputs a signal when the count on the counter "b" 325 increases to or beyond the setting "b". This output signal constitutes a head fault detection output. The setting "a" is determined based on the current waveform at the time of shorting of the main electrodes, while the setting "b" is empirically determined taking the operating conditions of the actual recording apparatus into consideration.

Now, the operation will be explained with reference to Figs. 11A and 11B.

The sequencer "A" 114 operates during the period when the group "A" of the main electrodes are energized. In each cycle of energization of the main electrodes, the pulses generated by the pulse generator 322 are counted by the counter "a" 321 during the period (t1) when the output of the comparator 13 is LOW, i.e. the period t1 from time s0 or s1 to time p1.

In the absence of a short-circuit between the main electrodes, the count is not decreased below the setting "a", and the output of the comparator "a" 323 is HIGH, for example. Once a short-circuit occurs between the main electrodes, however, the period t1 in Fig. 11B becomes shorter. Therefore, the count on the counter "a" 321 becomes smaller than the setting "a", so that the output of the comparator a323 becomes HIGH, for example. In the case where the output of the comparator "a" 323 is HIGH at the voltage application start time p1 for the corresponding main electrode group and the opposite main electrode group, the counter "b" 325 increments the count by one. If the output of the comparator "a" 323 is LOW at such timing, on the other hand, the count of the counter "b" 325 is cleared. It is also possible to use the type of a counter decremented in such a case.

When the output of the comparator "a" 323 becomes successively HIGH, the counter "b" 325 increases the count. In the case where the count on the counter "b" 325 increases to or beyond a number predetermined by the setting "b", the comparator "b" 326 generates an output signal indicating the detection of a head fault.

This is also the case with the sequencers according to the second embodiment, in that each sequencer detects a head fault independently according to the timing of energization of the corresponding main electrode group and in that once a head fault is detected, the output continues to be held until a reset signal is input.

The sequencer described above is configured of a digital circuit, and therefore the detection speed is more accurate than the analog circuit.

When the energization period of the group "A" ends and the energization period of the group "B" starts, the sequencer "B" is activated. The operation of this sequencer is switched by use of the timing pulse produced from the timing pulse generator 203 of the electrostatic recording apparatus shown in Fig. 7.

With the configuration described above, the peak current dynamically changes. Nevertheless, the short-circuit of the main electrodes can be detected more accurately than in the prior art. Further, the number of pulses and the number of occurrences of the short-circuit of the main electrodes can be set by the setter in accordance with the situation in which the detection of the short-circuit is desired, and therefore an improved detection accuracy is expected. Also, when the main electrode current is in the state as shown in Fig. 8A, the short-circuit can be positively detected by adjusting the magnitude of the output by the arithmetic unit 117 of Fig. 9.

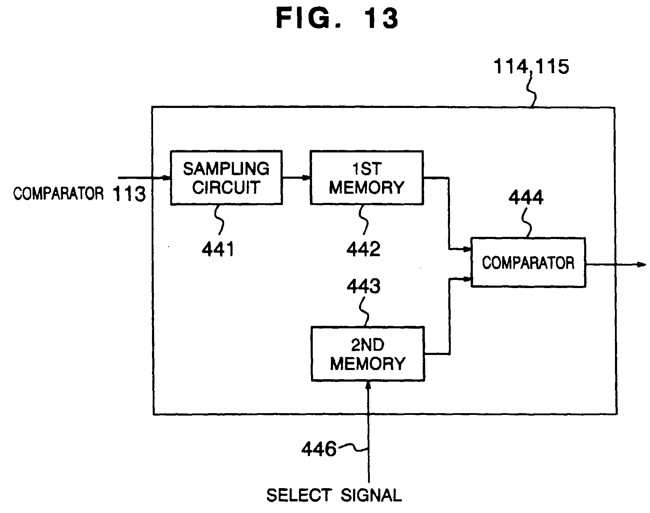

Now, a third embodiment will be explained with reference to Fig. 13. Fig. 13 shows a sampling circuit 441 for sampling the output of a current detector; a first memory 442 for storing the sampled current waveform value as data; and a second memory 443 for storing the current waveform set by the setter as temporal data in the absence of the main electrode short-circuit.

The first memory 442 stores in chronological order a plurality of instantaneous digital values of the current obtained by sampling the output of the current detector at predetermined time intervals. The second memory 443, on the other hand, stores in chronological order the instantaneous value of each of the various current waveforms in the absence of the main electrode short-circuit at timings corresponding to the timings of the instantaneous values of the main electrode current stored in the first memory. The comparator 444 compares the value stored in the first memory with the value of the selected one of the various waveforms stored in the second memory. In the process, the total value stored in each memory is compared, and in the case where the total value in the first memory is larger than the total value in the second memory by at least a predetermined value, it is determined that a short-circuit has occurred and an output is generated. As an alternative, the values stored in the first and second memories at the same timing are compared with each other, and the relative magnitudes thereof are determined. In the case where a value larger than a predetermined proportion of the total value stored in the first memory is larger than the value stored in the second memory at the same timing, then it is determined that a short-circuit has occurred and an output can be generated.

In the case under consideration, the second memory is adapted to change the output in accordance with the signal from the selector. Specifically, since the current waveform changes with the data plotted, the data on the current waveform associated with each type of plotted data is stored in the second memory, and one of the information on the plotted data thus stored is selected. To store the temporal data of the current waveform in the second memory taking the plotted data in all cases into account requires an astronomical capacity and is not realistic. In view of this, only the temporal data on typical current waveforms are stored in the second memory 443, from which the appropriate one is selected based on a reference value.

The reference value is a value calculated based on the plotted data, and the density of the plotted data is a case in point. For example, the proportion which the number of the main electrodes actually energized represents of the total number of the main electrodes in a single session of energization provides such a reference value.

The second memory 443 has stored therein the temporal data indicating typical current waveforms for different densities of the plotted data, and each temporal data is discriminated according to the reference value indicating the corresponding density, so that one of them can be selected by a select signal applied from an external source.

Once the plotted data to be recorded is determined, the density thereof is determined, so that one of the temporal data stored in the second memory 443 is selected by a select signal 446 indicating the temporal data having a reference value corresponding to the density thus determined. The actual main electrode current waveform stored in the first memory 442 is compared with the temporal data selected by the second memory 443 in the comparator 444.

### INDUSTRIAL APPLICABILITY

The head fault detector and device and the recording head unit of the electrostatic recording apparatus according to the present invention can solve the various problems caused by the increased recording speed or the increased width of the recording medium, with a simple structure, and can positively achieve the intrinsic functions of the apparatus.

## Claims

1. A detection device for detecting a head fault caused due to a short-circuit between main electrodes of an electrostatic recording head unit, comprising:
a current detector for detecting a main electrode current supplied to at least one group of a plurality of the main electrodes;
means for holding a value corresponding to a peak value of the main electrode current detected by said current detector; and
first comparator means for comparing the value held in said holding means with a value corresponding to the main electrode current detected by said current detector to determine whether or not the main electrode current is a short-circuit current.

2. A head fault detection device according to Claim 1, further comprising second comparator means for comparing a number of times determined by said first comparator means that said main electrode current is the short-circuit current with a predetermined value, and when the number of times determined as the short-circuit current exceeds the predetermined value, determining that a head fault is occurred in the main electrode group.

3. A detection device for detecting a head fault caused due to a short-circuit between main electrodes of an electrostatic recording head unit, comprising:
a current detector for detecting a main electrode current supplied to at least one group of the main electrodes;
means for holding a first value corresponding to a peak value of the main electrode current detected by the current detector;
first comparator means for comparing the first value with a second value corresponding to the main electrode current detected by the current detector, comparing a first timing when the second value becomes lower than the first value with a predetermined second timing to generate an output when the first timing fails to occur before the second timing; and
second comparator means for comparing a number of times the output is generated from the first comparator means with a predetermined third value, and when the number of times is larger than the third value, determining that a head fault is occurred in the main electrode group.

4. A head fault detection device according to Claim 3, wherein the second timing is one when the second value is substantially zero in the case where the main electrode group is normal.

5. A head fault detection device according to Claim 4, wherein the second comparator means includes a counter incremented by "1" in response to the output generated from the first comparator means, and a comparator for comparing a count on the counter with the third value.

6. A detection device for detecting a head fault caused due to a short-circuit between main electrodes of an electrostatic recording head unit, comprising:
a current detector for detecting a main electrode current supplied to at least one group of the main electrodes;
means for holding a first value corresponding to a peak value of the main electrode current detected by the current detector;
first comparator means for comparing the first value with a second value corresponding to the main electrode current detected by the current detector to detect a first timing when the second value becomes lower than the first value;
time interval measuring means for measuring a time interval between the first timing and a predetermined second timing;
second comparator means for comparing a first time interval between the first timing and the predetermined second timing with a predetermined second time interval to generate an output when the first time interval is smaller than the second time interval; and
third comparator means for comparing a number of times an output is generated from the second comparator means, with a predetermined third value to determine that a head fault is occurred in the main electrode group when the number of times is larger than the third value.

7. A head fault detection device according to Claim 6, wherein the second timing is one when the second value becomes substantially zero in the case where the one group of the main electrodes is normal.

8. A detection device for detecting a head fault caused due to a short-circuit between main electrodes of an electrostatic recording head unit, comprising:
a first memory for sampling a main electrode current supplied to at least one group of the main electrodes at a plurality of predetermined timings to store a plurality of first values indicating a sampled current values;
a second memory for storing a second value indicating a current value at time points corresponding to the plurality of timings of the main electrode current assumed to be supplied to the group when the main electrodes are normal; and
comparator means for comparing the plurality of first values stored in the first memory with the second value stored in the second memory.

9. A method of detecting a head fault caused due to a short-circuit between main electrodes of an electrostatic recording head unit, comprising the steps of:
detecting a main electrode current supplied to at least one group of the main electrodes to hold a value corresponding to a peak value of the main electrode current; and
comparing a value corresponding to the held peak value of the main electrode current with a value corresponding to the main electrode current detected by the current detector to determine, as a result of the comparison, whether or not the short-circuit is occurred in the main electrodes.

10. An electrostatic recording head unit comprising:
a head assembly including a multiplicity of main electrodes for discharge aligned along a path of a recording medium to be recorded, and a plurality of auxiliary electrodes arranged in opposed relation to the main electrodes;
a coupling board on which connection portions connected to the main electrodes and signal lines connected to the connection portions are mounted;
a main electrode drive board on which a main electrode drive circuit for driving the multiplicity of main electrodes is mounted;
an auxiliary electrode drive board on which an auxiliary electrode drive circuit for driving the plurality of the auxiliary electrodes is mounted; and
means for connecting the main electrode drive board and auxiliary electrode drive board to the coupling board.
